# EUROPEAN PATENT APPLICATION

(11) **EP 4 470 941 A1**
(43) Date of publication of application: **04.12.2024**
(21) Application number: 23775231.6
(22) Date of filing: 17.03.2023
(51) Int. Cl.: B65D 90/00, B65D 88/74, B65D 88/06, B65D 88/54, B64G 1/40

(54) **VORTEX PREVENTION APPARATUS AND INSULATION TANK COMPRISING SAME**

(30) Priority: 23.03.2022 KR 20220036011
(71) Applicant: Innospace Co., Ltd., Sejong 30121 (KR)
(72) Inventor: YANG, Chang Hwan, Sejong 30121 (KR); CHA, Seung Won, Sejong 30121 (KR); WON, Do Yun, Sejong 30121 (KR); KIM, Soo Jong, Sejong 30121 (KR)
(74) Representative: Krauns, Christian
(86) International application number: PCT/KR2023/003567
(87) International publication number: WO 2023/182734

(57) **Abstract**

The present invention relates to: a vortex prevention apparatus for, when a fluid filled in a tank member such as an insulation tank is being discharged, preventing a vortex from being generated at an outlet provided in the tank member, and minimizing the change in the flow rate of the fluid being discharged through the outlet; and an insulation tank comprising same. To this end, the vortex prevention apparatus is integrally coupled to a lower cover, having at least one outlet through which the fluid filled in the insulation tank is discharged, of a lower cap of the insulation tank, and comprises: a prevention body having a cone shape centered on an apex portion; spacing members extending vertically and horizontally from the prevention body; and mesh hole portions formed passing through the edges of the prevention body by the spacing members.

## Description

### Technical Field

The present disclosure relates to a vortex prevention apparatus and an insulation tank including the same and, more particularly, to a vortex prevention apparatus, which prevents a vortex from being generated at an outlet provided in a tank member such as an insulation tank when a fluid filled in the tank member is being discharged, and minimizes a change in the flow rate of the fluid being discharged through the outlet, and an insulation tank including the same.

### Background Art

The oxidizer tank of a launch vehicle is connected to a combustor and supplies a liquid oxidizer necessary for combustion to the combustor.

In this case, as the liquid oxidizer in the oxidizer tank is exposed to the structural characteristics of the launch vehicle and various environments, a vortex in which the liquid oxidizer rotates occurs during the process of discharging the liquid oxidizer inside the oxidizer tank. When the liquid oxidizer is lowered to a predetermined level due to this vortex, the liquid oxidizer flows into the combustor along with pressurized gas and the flow rate of the pure liquid oxidizer is reduced, causing a very serious problem of deteriorating a combustion performance in the combustor. In particular, in the case of a liquid oxidizer with a low water level, the moving area of a fluid increases due to the sloshing of the fluid at an outlet, and thus the fluid does not pass through the outlet stably, and as a result, a problem occurs in which the flow of the fluid into a combustion chamber is not steady.

A prior art document includes Korean Patent No. 10-0957053 (published on May 13, 2010, invention title: SAFETY INJECTION TANK WITH VORTEX PREVENTION DEVICE).

### Disclosure

### Technical Problem

The present disclosure has been made to solve the above problems occurring in the prior art, and is intended to propose a vortex prevention apparatus, which prevents a vortex from being generated at an outlet provided in a tank member such as an insulation tank when a fluid filled in the tank member is being discharged, and prevents a change in the flow rate of the fluid being discharged through the outlet, and an insulation tank including the same.

### Technical Solution

In order to accomplish the objectives of the present disclosure described above, according to an exemplary embodiment, there is provided a vortex prevention apparatus of the present disclosure coupled to a lower cover of a lower cap of a tank member, with the lower cover having at least one outlet through which a fluid filled in the tank member is discharged, the vortex prevention apparatus including: a prevention body having a cone shape based on an apex portion; spacing members extending longitudinally and laterally from the prevention body; and mesh hole portions formed through an edge of the prevention body by the spacing members.

The vortex prevention apparatus according to the present disclosure may further include: a fixing flange formed on edges of the spacing members by protruding in a ring shape therefrom so that the fixing flange is coupled to the lower cover.

Here, the fixing flange may be integrally coupled to the lower cover.

Here, each of the mesh hole portions may have a shape of an equilateral trapezoid.

An insulation tank according to the present disclosure includes: a hollow open cylinder part with an open upper end portion and an open lower end portion in an upright state thereof; an upper cap configured to seal the upper end portion of the open cylinder part; and a lower cap configured to seal the lower end portion of the open cylinder part, wherein the lower cap includes: a lower dome coupled to the lower end portion of the open cylinder part and having a lower cap opening formed through a central portion thereof; a lower cover coupled to the lower dome to seal the lower cap opening and having at least one outlet through which a fluid filled inside is discharged; and a prevention module configured to be coupled to the lower cover and to prevent a vortex of the fluid discharged through the outlet, wherein the prevention module includes the vortex prevention apparatus according to the present disclosure.

### Advantageous Effects

According to the vortex prevention apparatus and the insulation tank including the same according to the present disclosure, it is possible to prevent a vortex from being generated at an outlet provided in a tank member such as an insulation tank when a fluid filled in the tank member is being discharged, and to minimize a change in the flow rate of the fluid being discharged through the outlet.

In addition, according to the present disclosure, it is possible for the cone-shaped prevention body to allow a remaining fluid to gather on the edge of the prevention body without spreading widely, to maximize a vortex prevention performance while a fluid passes through the mesh hole portions, and to maximize the discharge flow rate of the remaining fluid.

In addition, according to the present disclosure, through the additional configuration of the fixing flange, it is possible to improve a coupling force between the prevention body and the lower cover, and prevent the movement of the prevention body.

In addition, according to the present disclosure, through the integration of the fixing flange and the lower cover, it is possible to maximize the convenience of manufacturing and installation.

In addition, according to the present disclosure, through the limitation of the shape of the mesh hole portion, it is possible to stably transfer a remaining fluid delivered from the prevention body to the outlet and to maximize a vortex prevention performance.

In addition, according to the present disclosure, it is possible to stably distribute a remaining fluid to the lower cover and to minimize the change of a flow rate in the outlet.

### Description of Drawings

FIG. 1 is a cross-sectional perspective view illustrating an insulation tank according to an embodiment of the present disclosure.
FIG. 2 is a plan view illustrating a prevention module and an enlarged cross-sectional view of a main part thereof in the insulation tank according to an embodiment of the present disclosure.
FIG. 3 is a graph illustrating the liquid volume fraction of fluid discharged through a plurality of outlets in time series depending on the presence or absence of the prevention module in the insulation tank according to an embodiment of the present disclosure.
FIG. 4 is a view illustrating the behavior of a fluid discharged through a plurality of outlets depending on the presence or absence the prevention module in the insulation tank according to an embodiment of the present disclosure, wherein FIG. 4(a) illustrates the behavior of a fluid discharged through the plurality of outlets from the insulation tank provided with the prevention module at 0.1 seconds, and FIG. 4(b) illustrates the behavior of a fluid discharged through the plurality of outlets from the insulation tank without the prevention module at 0.1 seconds.
FIG. 5 is a graph illustrating the liquid volume fraction of a fluid discharged through one outlet in time series depending on the presence or absence of the prevention module in the insulation tank according to an embodiment of the present disclosure.
FIG. 6 is a view illustrating the behavior of a fluid discharged through one outlet depending on the presence or absence of the prevention module in the insulation tank according to an embodiment of the present disclosure, wherein FIG. 6(a) illustrates the behavior of a fluid discharged through one outlet from the insulation tank provided with the prevention module at 0.1 seconds, and FIG. 6(b) illustrates the behavior of a fluid discharged through one outlet from the insulation tank without the prevention module at 0.1 seconds.

### Mode for Invention

Hereinafter, an embodiment of a vortex prevention apparatus and an insulation tank including the same according to the present disclosure will be described with reference to the accompanying drawings. In this case, the present disclosure is not restricted or limited by the embodiment. In addition, when describing the present disclosure, detailed descriptions of known functions or configurations may be omitted to make the gist of the present disclosure clear.

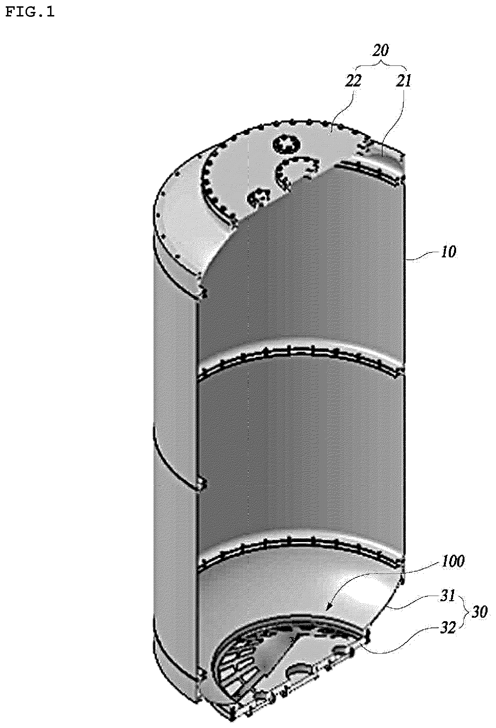

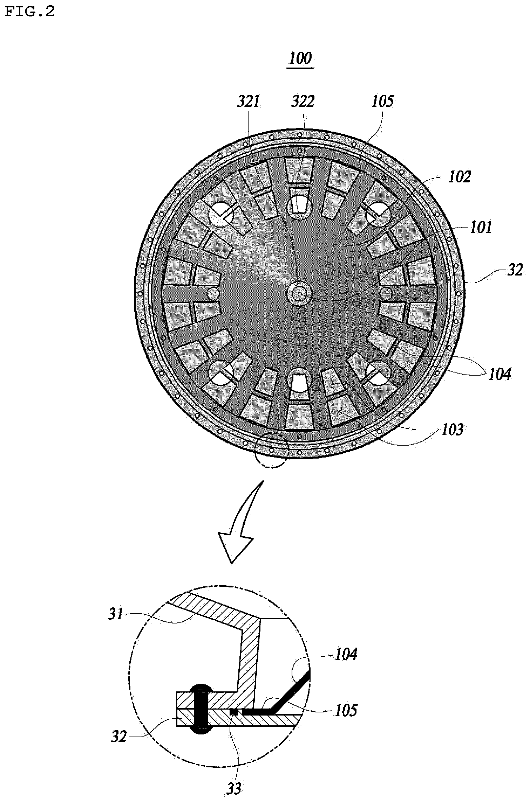

Referring to FIGS. 1 to 6, the insulation tank according to an embodiment of the present disclosure may be a container filled with fluid inside and may include an open cylinder part 10, an upper cap 20, and a lower cap 30. Here, the fluid may be composed of a cryogenic liquid oxidizer to generate propulsion for a space launch vehicle.

The open cylinder part 10 has a hollow cylinder shape with an open upper end portion and an open lower end portion in an upright state thereof.

Although not shown, the open cylinder part 10 may have a double walled structure. More specifically, the open cylinder part 10 may include a flat plate portion having a flat outer peripheral surface, an uneven portion slidably coupled to the flat plate portion, and multiple load dispersing spaces that are ring-shaped due to a portion of the uneven portion spaced apart from the flat plate portion and are arranged to be spaced apart from each other in the height direction of the open cylinder part. The flat plate portion and the uneven portion have a hollow cylindrical shape with an open upper end portion and an open lower end portion in an upright state thereof.

The upper cap 20 seals the upper end portion of the open cylinder part 10. It is advantageous for the upper cap 20 to have a dome shape to withstand a contraction force caused by a fluid.

The upper cap 20 may include an upper dome 21 coupled to the upper end portion of the open cylinder part 10 and having an upper cap opening formed through a central portion thereof, and an upper cover 22 coupled to the upper dome 21 to seal the upper cap opening and having at least one inlet for filling the inside of the open cylinder part 10 with a fluid.

An upper flange is provided on the edge of the upper cap opening in the upper dome 21, and the upper flange and the edge of the upper cover 22 may be coupled to each other by using a fastening member.

An upper sealing groove part is formed to be recessed in a ring shape on at least one of the upper flange and the edge of the upper cover 22, and an upper sealing member is coupled to the upper sealing groove part. A sealing force between the upper flange and the edge of the upper cover 22 may be improved by the upper sealing member.

The lower cap 30 seals the lower end portion of the open cylinder part 10. It is advantageous for the lower cap 30 to have a dome shape to withstand a contraction force caused by a fluid.

The lower cap 30 may include a lower dome 31 coupled to the lower end part of the open cylinder part 10 and having a lower cap opening formed through a central portion thereof, a lower cover 32 coupled to the lower dome 31 to seal the lower cap opening and having at least one outlet through which a fluid filled inside is discharged, and a prevention module 100 that is coupled to the lower cover 32 and prevents a vortex of the fluid discharged through the outlet.

The outlet provided in the lower cover 32 may include a central outlet 321 provided in the central portion of the lower cover 32, and one or more spacing outlets 322 that are spaced apart from the central outlet 321 and are spaced apart from each other.

A lower flange is provided on the edge of the lower cap opening in the lower dome 31, and the lower flange and the edge of the lower cover 32 may be coupled to each other by using a fastening member.

A lower sealing groove part is formed to be recessed in a ring shape on at least one of the lower flange and the edge of the lower cover 32, and a lower sealing member 33 is coupled to the lower sealing groove part. A sealing force between the lower flange and the edge of the lower cover 32 may be improved by the lower sealing member 33.

The prevention module 100 includes the vortex prevention apparatus according to an embodiment of the present disclosure. In the embodiment of the present disclosure, the vortex prevention apparatus is described as being provided in the insulation tank according to the embodiment of the present disclosure, but is not limited thereto and may be applied to various known tank members.

The vortex prevention apparatus according to an embodiment of the present disclosure may include a prevention body 102 having a cone shape based on an apex portion 101, spacing members 104 extending longitudinally and laterally from the prevention body 102, and mesh hole portions 103 formed through the edge of the prevention body 102 by the spacing members 104. In other words, the prevention body 102 may have the shape of a circular cone.

It is advantageous for each of the mesh hole portions 103 to have the shape of an equilateral trapezoid.

The vortex prevention apparatus according to an embodiment of the present disclosure may further include a fixing flange 105 formed on the edges of the spacing members 104 by protruding in a ring shape therefrom so that the fixing flange 105 is coupled to the lower cover 32.

In response to this, the lower cover 32 may be provided with a flange seating part 323 on which the fixing flange 105 is seated.

The fixing flange 105 may be integrally coupled to the lower cover 32. The fixing flange 105 is seated on the flange seating part 323 while being stacked and supported on the lower cover 32, and the fixing flange 105 and the lower cover 32 may be integrally coupled to each other by using a fastening member.

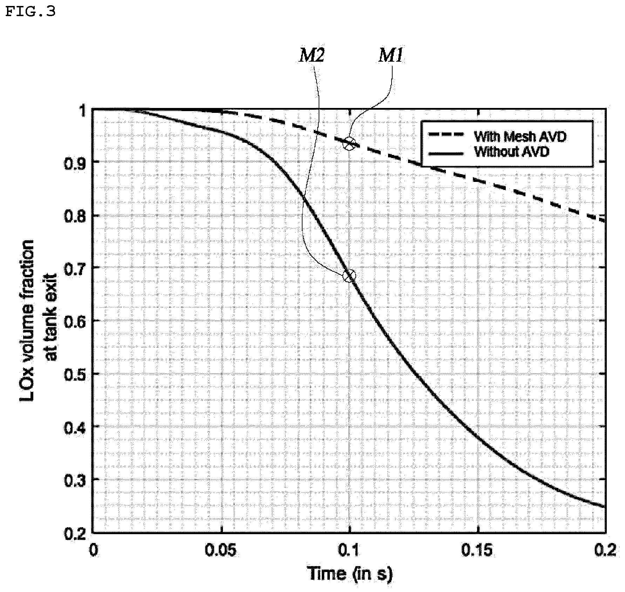

The graph of FIG. 3 has a blue curve which is a curve passing through point M1 and illustrates change in a liquid volume fraction of a fluid when the fluid is discharged through two or more outlets in a case in which the vortex prevention apparatus according to an embodiment of the present disclosure is provided. In addition, the graph of FIG. 3 has a red curve which is a curve passing through point M2 and illustrates change in a liquid volume fraction when a fluid is discharged through two or more outlets in a case in which the vortex prevention apparatus according to an embodiment of the present disclosure is not provided.

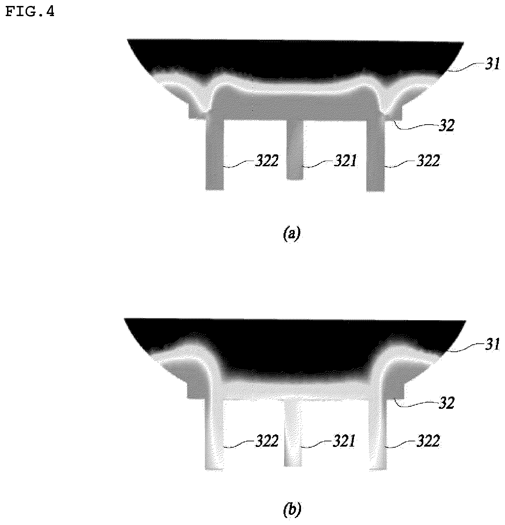

In the case in which the vortex prevention apparatus according to the embodiment of the present disclosure is provided, when the fluid is discharged through two or more outlets, it can be seen that the change in the liquid volume fraction gradually decreases as time passes like the blue curve illustrated in FIG. 3. In addition, as illustrated in FIG. 4 (a), at a time point M1 at which 0.1 seconds have elapsed and a fluid is discharged through two or more outlets, a remaining fluid is distributed approximately evenly at the upper portion of the lower cover 32 at the lower cap opening, and is stably discharged through the two or more outlets by pressurized gas.

However, in a case in which the vortex prevention apparatus according to the embodiment of the present disclosure is not provided, it may be checked that when a fluid is discharged through two or more outlets, a liquid volume fraction decreases rapidly as time passes like the red curve illustrated in FIG. 3. In addition, as illustrated in FIG. 4 (b), at a time point M2 at which 0.1 seconds have elapsed and a fluid is discharged through two or more outlets, there is a problem in that a remaining fluid is concentrated at the edge of the lower cover 32 at the lower cap opening, and the remaining fluid and pressurized gas are together discharged to the two or more outlets and flow into a combustion chamber.

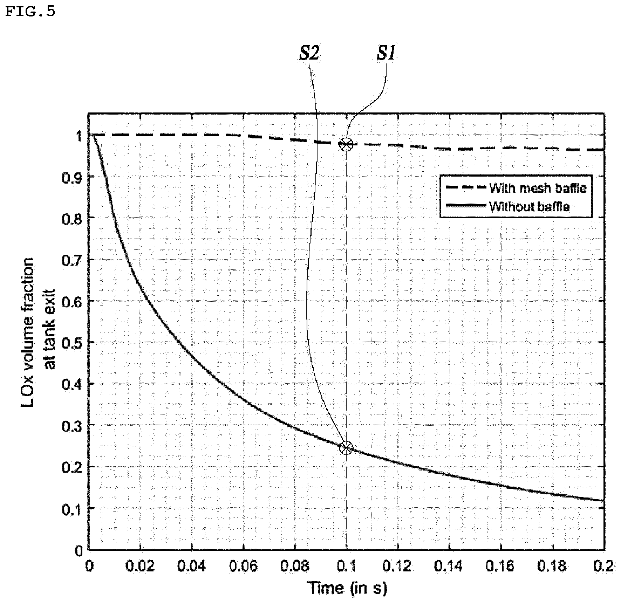

In the graph of FIG. 5, a blue curve is a curve passing through point S1, and illustrates a change in a liquid volume fraction when a fluid is discharged through one outlet in a case in which the vortex prevention apparatus according to the embodiment of the present disclosure is provided. In addition, in the graph of FIG. 5, a red curve is a curve passing through point S2, and illustrates a change in a liquid volume fraction when a fluid is discharged through one outlet in a case in which the vortex prevention apparatus according to the embodiment of the present disclosure is not provided.

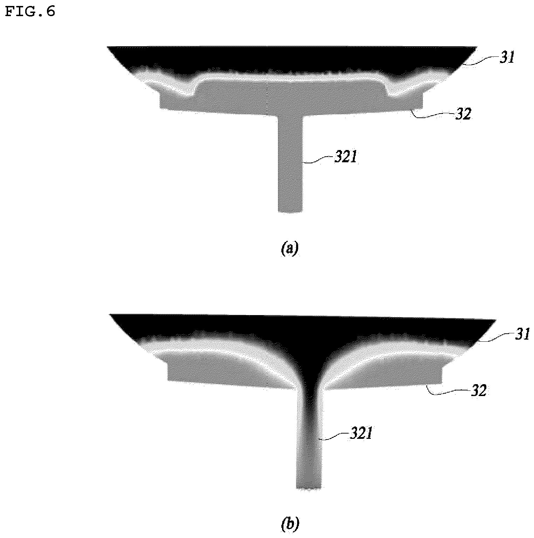

In the case in which the vortex prevention apparatus according to the embodiment of the present disclosure is provided, it may be checked that when a fluid is discharged through one outlet, a liquid volume fraction decreases gradually as time passes like the blue curve illustrated in FIG. 5. In addition, as illustrated in FIG. 6(a), at a time point S1 at which 0.1 seconds have elapsed and a fluid is discharged through one outlet, a remaining fluid is distributed approximately evenly at the upper portion of the lower cover 32 at the lower cap opening, and pressurized gas first pressurizes the edge of the remaining fluid distributed on the upper side of the lower cover 32, so the remaining fluid is stably discharged through the one outlet by the pressurized gas.

However, in the case in which the vortex prevention apparatus according to the embodiment of the present disclosure is not provided, it may be checked that when a fluid is discharged through one outlet, a liquid volume fraction decreases rapidly as time passes like the red curve illustrated in FIG. 5. In addition, as illustrated in FIG. 6(b), at a time point S2 at which 0.1 seconds have elapsed and a fluid is discharged through one outlet, there is a problem in that a remaining fluid is concentrated at the edge of the lower cover 32 at the lower cap opening, and the remaining fluid and pressurized gas are together discharged to the one outlet and flow into a combustion chamber.

In FIGS. 4 and 6, a red part represents a remaining fluid remaining in the lower cap 30, and a blue part represents pressurized gas that pressurizes the remaining fluid in the lower cap 30.

According to the vortex prevention apparatus and the insulation tank including the same described above, it is possible to prevent a vortex from being generated at an outlet provided in a tank member such as the insulation tank when a fluid filled in the tank member is being discharged, and to prevent a change in the flow rate of the fluid being discharged through the outlet.

In addition, it is possible for the cone-shaped prevention body 102 to allow a remaining fluid to gather on the edge of the prevention body 102 without spreading widely, to maximize a vortex prevention performance while a fluid passes through the mesh hole portions 103, and to maximize the discharge flow rate of the remaining fluid.

In addition, through the additional configuration of the fixing flange 105, it is possible to improve a coupling force between the prevention body 102 and the lower cover 32, and prevent the movement of the prevention body 102.

In addition, through the integration of the fixing flange 105 and the lower cover 32, it is possible to maximize the convenience of manufacturing and installation.

In addition, through the limitation of the shape of the mesh hole portion 103, it is possible to stably transfer a remaining fluid delivered from the prevention body 102 to the outlet and to maximize a vortex prevention performance.

In addition, it is possible to stably distribute a remaining fluid to the lower cover 32 and to minimize the change of a flow rate in the outlet.

As described above, the exemplary embodiments of the present disclosure have been described with reference to the drawings, but those skilled in the art may variously modify or change the embodiments within the scope of the spirit and scope of the present disclosure as set forth in the claims below.

### <Description of the Reference Numerals in the Drawings>

10: Open cylinder part 20: Upper cap 21: Upper dome
22: Upper cover 30: Lower cap 31: Lower dome
32: Lower cover 321: Central outlet 322: Spacing outlet
323: Flange seating part 100: Prevention module 101: Apex portion
102: Prevention body 103: Mesh hole portion 104: Spacing member
105: Fixing flange

## Claims

1. A vortex prevention apparatus coupled to a lower cover of a lower cap of a tank member, with the lower cover having at least one outlet through which a fluid filled in the tank member is discharged, the vortex prevention apparatus comprising:
a prevention body having a cone shape based on an apex portion;
spacing members extending longitudinally and laterally from the prevention body; and
mesh hole portions formed through an edge of the prevention body by the spacing members.

2. The vortex prevention apparatus of claim 1, further comprising:
a fixing flange formed on edges of the spacing members by protruding in a ring shape therefrom so that the fixing flange is coupled to the lower cover.

3. The vortex prevention apparatus of claim 2, wherein the fixing flange is integrally coupled to the lower cover.

4. The vortex prevention apparatus of claim 1, wherein each of the mesh hole portions has a shape of an equilateral trapezoid.

5. An insulation tank comprising:
a hollow open cylinder part with an open upper end portion and an open lower end portion in an upright state thereof;
an upper cap configured to seal the upper end portion of the open cylinder part; and
a lower cap configured to seal the lower end portion of the open cylinder part,
wherein the lower cap comprises:
a lower dome coupled to the lower end portion of the open cylinder part and having a lower cap opening formed through a central portion thereof;
a lower cover coupled to the lower dome to seal the lower cap opening and having at least one outlet through which a fluid filled inside is discharged; and
a prevention module configured to be coupled to the lower cover and to prevent a vortex of the fluid discharged through the outlet,
wherein the prevention module comprises the vortex prevention apparatus described in any one of claims 1 to 4.
